Europäisches Patentamt

European Patent Office

Office européen des brevets

(19)

(11) Publication number: **0 183 661**
**A2**

(12) # EUROPEAN PATENT APPLICATION

(21) Application number: **85850304.8**

(22) Date of filing: **01.10.85**

(51) Int. Cl.⁴: **G 01 K 1/08**

(30) Priority: **28.11.84 SE 8406013**

(43) Date of publication of application:
**04.06.86 Bulletin 86/23**

(84) Designated Contracting States:
**AT BE CH DE FR GB IT LI NL**

(71) Applicant: **Pac Innovation Nya AB**
**PL 4460**
**S-199 92 Enköping(SE)**

(72) Inventor: **Welin-Berger, John H. G.**
**PL 4460**
**S-199 92 Enköping(SE)**

(74) Representative: **Omming, Allan**
**A. OMMING & CO. AB Sveavägen 28-30**
**S-111 34 Stockholm(SE)**

(54) **A disposable protective cover for thermometers.**

(57) A disposable protective cover for clinical thermometers, comprising an inner sheath (7,8) and an outer sheath (1,2), having open ends (6,9) and closed ends (11,12). The two sheaths are joined together by a tab (14) which is defined by a perforation (13) and which fixes the position of the inner sheath (7,8) relative to the outer sheath (1,2), such as to prevent the closed end (11) of the inner sheath from reaching the closed end (12) of the outer sheath. Inibial withdrawal of the inner sheath (7,8) from the outer sheath (1,2) causes the perforation (13) to tear, such that when the thermometer enclosed within the inner sheath is reinserted into the outer sheath after being used, it will move further into the outer sheath than was initially the case, therewith bringing a previously visible coloured mark (15) on the inner sheath to a location beneath an opaque part (4) on the outer sheath (1,2), indicating that the protective thermometer cover has been used.

Fig. 1

Fig. 2

A disposable protective cover for thermometers

The present invention relates to a disposable protective
cover intended for thermometers and being of the kind set
forth in the preamble of the following claim 1.

Thermometer covers of this kind are well known and are
described in, for example, US Patent Specification Serial
No. 3 752 309. Although such thermometer covers are excellent
for the purpose intended they have the disadvantage that
subsequent to using the thermometer and re-inserting the
same together with the inner sheath into the outer sheath
and reading the temperature registered on the thermometer,
under hygienic conditions, through the front and rear transparent sides of the inner and outer sheaths, it is possible
to withdraw the thermometer from the inner sheath without
disturbing the sheath to any appreciable extent from the
position if occupied initially, when the thermometer was
first inserted into the inner sheath; in other words, if the
thermometer cover is not thrown away immediately after use
and unintentionally left available, it is difficult to discern between the used theremometer cover and one that has
not been used.

The object of the present invention is to provide simple
and effective means which will enable a used thermometer
cover to be instantly recognized as such, therewith to prevent the used cover from being used a second time.

This object is achieved with a protective thermometer-cover
constructed in accordance with the invention and having the
characteristic features set forth in the characterizing
clause of the following claim 1. Because the inner sheath
with the thermometer enclosed therein is withdrawn from the
outer sheath by pulling on the flap marked with the perforations until the perforations tear, the then loosely
hanging tab fixed to the inner sheath will indicate, upon insertion of the used thermometer and its encasing inner sheath back into the outer sheath, that the thermometer cover has been used and that a thermometer has been removed therefrom.

These and other advantages afforded by the thermometer cover according to the invention will become apparent from the following description of an exemplifying embodiment of the invention made with reference to the accompanying drawing, in which

Figure 1 is a plan view of the protective thermometer cover;

Figure 2 is a longitudinal sectional view of the cover illustrated in Figure 1;

Figure 3 is a sectional view similar to Figure 2, but with the inner sheath withdrawn; and

Figure 4 is a sectional view similar to Figure 3, but with the inner sheath re-inserted into the outer sheath.

It will be seen from the drawing that the disposable protective thermometer cover of the illustrated embodiment comprises an outer sheath which incorporates two elongated, narrow strips of material forming a front side 1 and a rear side 2. The rear side 2 is suitably made from a plastics coated paper material, as are also the two end parts 3, 4 of the front side 1. The centre part 5 of the front side 1 of the outer sheath, however, comprises a transparent plastics-foil material. The front and rear sides of the outer sheath are welded together around their mutually contacting edges, with the exception of the end referenced 6, which is left open.

The cover further comprises an inner sheath which is located within the outer sheath 1, 2 and which comprises two profiled plastics foil strips, forming a front side 7 and a rear side 8, these two sides being welded around their mutually contacting edges, with the exception of the end marked 9, which is left open. The free end-part of the front side 7 is coloured and projects outwardly of the edge of the front side 1 of the outer sheath through a distance a. The rear side 8 of the inner sheath is arranged to extend somewhat beyond the edge of the top side 7 in the region of the open end 9 and is welded to the outer edge of the rear side 2 of the outer sheath 1, 2 to form an outer double edge 10. The inner and outer sheaths are in this way fixed relative to one another in the direction of their longitudinal axes, so that the closed end 11 of the inner sheath 7, 8 is located substantially at the aforesaid distance a from the closed end 12 of the outer sheath 1, 2. The rear side 2 of the outer sheath is provided with a transversely extending perforation 13 at a location thereon somewhat outwardly of the edge of the top side 1 at the open end 6, this perforation defining an outwardly projecting tab 14.

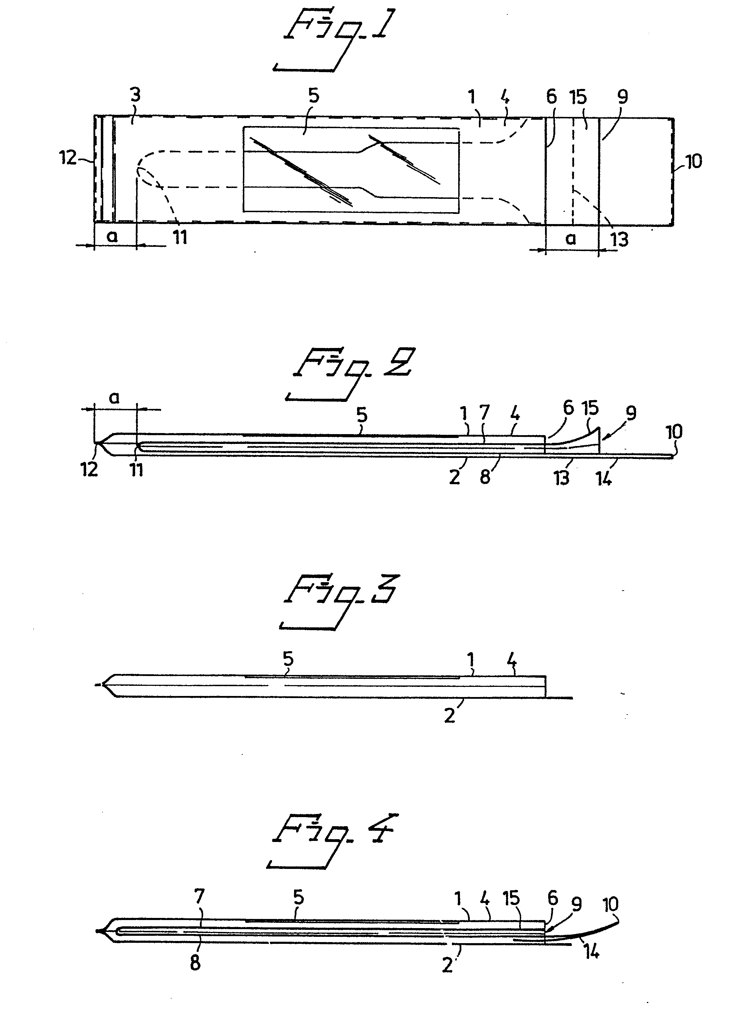

The protective thermometer-cover is used in the following manner: A thermometer is inserted into the inner sheath 7, 8, the weld at 10 preventing the thermometer from being inserted wrongly. The tab 14 is then grasped and pulled until the perforation 13 tears, the inner sheath 7, 8 with the thermometer inserted therein being withdrawn from the outer sheath 1, 2. Figure 3 illustrates the outer sheath 1, 2 minus the tab 14.

When the thermometer, together with its encasing inner sheath 7,8 is again inserted into the outer sheath 1, 2, the thermometer will slide together with the inner sheath until stopped by the closed end 12 of the outer sheath, i.e. will slide further than was initially the case through a distance corresponding to the aforesaid distance a. The coloured end part of the top side 7 of the inner sheath is referenced 15 in Figure 4, from which it can be seen that this coloured part 15 is located beneath the opaque end part 4 of the top side 1 of the outer sheath, thereby indicating by its absence, when the thermometer has been withdrawn, that the cover has been used.

If not were the case, the coloured part 15 would be visible at a point externally of the edge of the end part 4, as in the Figure 1 and 2 illustration.

CLAIMS:

1. A disposable protective cover for thermometers comprising an inner sheath (7,8) made of foil material, and an outer sheath (1,2) in which the inner sheath is accomodated, the inner sheath being intended to receive a thermometer which is subsequently to be withdrawn from the outer sheath (1,2) together with the inner sheath (7,8) and after being used to be re-inserted into the outer sheath with the inner sheath located around said thermometer, the two sheaths being of tubular configuration and each having an open and a closed end (11,12) and substantially planar front and rear sides, of which the front sides are transparent at least in part, characterized in that the rear side (2) of the outer sheath (1,2) projects beyond the front side (1) thereof in the region of the open end (6) of the outer sheath to form a tab (14) which is defined by a transverse perforation (13) at its junction with said rear side (2); and in that the free end of the tab (14) is fastened to the outer end of the rear side (8) of the inner sheath.

2. A protective cover according to Claim 1, characterized in that the inner sheath (7,8) extends in the outer sheath (1,2) through a distance solely such that the closed end (11) of the inner sheath is located at a given distance ($\underline{a}$) from the closed end (6) of the outer sheath, e.g. 1 cm; and in that the free end (15) of the front side (7) of the inner sheath projects outwardly of the free end part (4) of the front side (1) of the outer sheath through a distance substantially equal to said given distance ($\underline{a}$), said free end part (4) being opaque.

3. A protective cover according to Claim 2, characterized in that the outwardly projecting free end (15) of the front side of the inner sheath is distinctly coloured.

## Fig. 1

## Fig. 2

## Fig. 3

## Fig. 4